# EUROPÄISCHE PATENTSCHRIFT

(11) **EP 0 902 065 B1**
(45) Veröffentlichungstag und Bekanntmachung des Hinweises auf die Patenterteilung: **07.05.2003**
(21) Anmeldenummer: 98116077.3
(22) Anmeldetag: 26.08.1998
(51) Int. Cl.: C09D 11/10

(54) **Strahlungshärtbares Bindemittel für Druckfarben**
Light curable binders for inks
Liants durcissables par rayonnement pour encres d'imprimerie

(30) Priorität: 10.09.1997 DE 19739620
(43) Veröffentlichungstag der Anmeldung: 17.03.1999
(73) Patentinhaber: BASF AKTIENGESELLSCHAFT, 67056 Ludwigshafen (DE)
(72) Erfinder: Prantl, Bernhard, Dr., 67549 Worms (DE); Beck, Erich, Dr., 68526 Ladenburg (DE); Königer, Rainer, Dr., 67061 Ludwigshafen (DE); Keil, Edmund, 67259 Heuchelheim (DE); Lokai, Matthias, 67677 Enkenbach-Alsenborn (DE); Reich, Wolfgang, Dr., 67133 Maxdorf (DE)

(56) Entgegenhaltungen:
- EP-A- 0 386 650
- EP-A- 0 464 466
- US-A- 5 182 324

## Beschreibung

Die Erfindung betrifft ein Gemisch, enthaltend
ein Kondensationsharz A) aufgebaut aus Harnstoff oder Harnstoffderivaten a₁) und Ketonen oder Aldehyden a₂), welche ausgewählt sind aus C-H aciden Aldehyden bzw. Ketonen oder deren Gemische mit Formaldehyd und
eine strahlungshärtbare Verbindung B) mit mindestens 2 Acryloyloder Methacryloylgruppen.

Druckfarben enthalten als wesentliche Bestandteile ein Bindemittel und ein Pigment. Im Falle strahlungshärtbarer Bindemittel wird die Druckfarbe nach erfolgtem Druck durch Bestrahlung mit energiereichem Licht oder Elektronenstrahlen gehärtet. Aus DE-A-2 251 433 sind strahlungshärtbare Bindemittel bekannt, welche zwingend Acrylamidgruppen enthalten. Die Bindemittel enthalten auch ein Harz, welches in organischen Flüssigkeiten löslich ist.

In DE-A-2 558 482 wird ein strahlungshärtbares Bindemittel beschrieben, welches durch Umsetzung von Amin/Formaldehydkondensaten mit Hydroxylgruppen enthaltenden (Meth)acrylverbindungen erhalten wird.

Die bisher bekannten strahlungshärtbaren Bindemittel haben vielfach eine nicht ausreichende Fähigkeit zur Pigmentbenetzung, was zu einer ungenügenden Pigmentaufnahme durch das Bindemittel, zu hohen Viskositäten, zu einer hohen Fließgrenze und zu ungenügenden anwendungstechnischen Eigenschaften der Druckfarbe führt. Unter Fließgrenze versteht man die Kraft bzw. Scherkraft, die mindestens aufgebracht werden muß, damit die Druckfarbe fließt. Gewünscht ist naturgemäß, daß die notwendige Kraft möglichst gering ist und die Druckfarbe so auf Druckmaschinen gut verarbeitbar ist.

Desweiteren zeigen die bisher bekannten Druckfarben im allgemeinen eine ungenügende Blockfestigkeit, d.h. es kommt bei Ablage der bedruckten Papiere, z.B. in Stapeln, zu Verklebungen zwischen den Papieren.

Die bisher bekannten Druckfarben zeigen ein noch nicht zufriedenstellendes Druckverhalten im Druckverfahren, insbesondere im Offsetverfahren. Beim Offsetverfahren ist die Zufuhr von Wasser notwendig. Um ein scharfes Druckbild zu bekommen, muß die Wasserzufuhr oft genau kontrolliert und das Mengenverhältnis Druckfarbe/Wasser konstant gehalten werden. Gewünscht sind Druckfarben, die bei hoher oder geringer oder ungleichmäßiger wasserzufuhr ein konstant gutes und scharfes Druckbild ergeben.

Aufgabe der vorliegenden Erfindung waren daher Bindemittel und Druckfarben, welche obige Nachteile nicht haben.

Demgemäß wurde das eingangs definierte Gemisch und die Verwendung des Gemischs als Bindemittel in Druckfarben gefunden.

Das Kondensationsharz A) ist aufgebaut aus Harnstoff oder Harnstoffderivaten a₁) und Ketonen-Aldehyden a₂).

Beim Harnstoff oder den Harnstoffderivaten handelt es sich insbesondere um solche der Formel 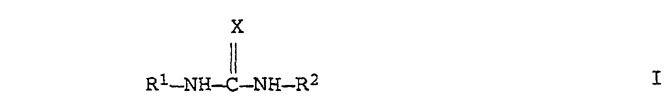 oder 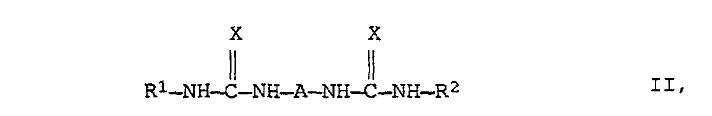 worin R¹ und R² unabhängig voneinander für ein H-Atom oder einen C₁-C₂₀-Alkylrest stehen, A für einen C₁-C₁₀-Alkylenrest und X für Sauerstoff oder Schwefel steht.

Bevorzugt stehen R¹ und R² für ein H-Atom oder eine C₁-C₄-Alkylgruppe, A für eine C₁-C₄-Alkylengruppe und X für Sauerstoff.

Besonders bevorzugt sind Verbindungen der Formel I.

Ganz besonders bevorzugt ist Harnstoff

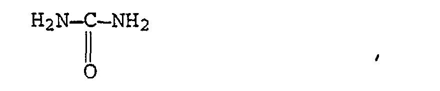

Bei a₂ handelt es sich um C-H acide Aldehyde oder Ketone oder deren Gemische mit Formaldehyd. Bevorzugt sind C-H acide, Aldehyde oder deren Gemische mit Formaldehyd.

C-H acide Aldehyde oder Ketone sind solche mit einem aciden Wasserstoffatom am α-C-Atom zur Carbonylgruppe. Bevorzugt sind C-H acide Aldehyde.

Geeignet sind z.B. C-H acide Aldehyde der Formel 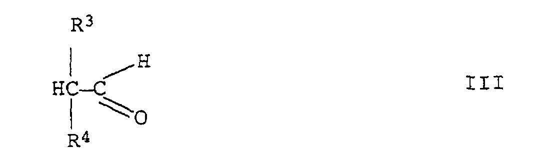 wobei R³ und R⁴ unabhängig voneinander für ein H-Atom oder eine C₁-C₂₀-, bevorzugt C₁-C₆-Alkylgruppe, eine Arylgruppe oder eine C₇bis C₂₀-, bevorzugt C₇-C₁₄-Alkarylgruppe stehen; Formaldehyd (R³ und R⁴ = H) ist ausgeschlossen.

Besonders bevorzugt sind Verbindungen der Formel III mit insgesamt weniger als 20 C-Atomen. Vorzugsweise steht maximal einer der Reste R³ und R⁴ für eine Alkylgruppe, Arylgruppe oder Alkarylgruppe. Als Keton sei z.B. Cyclohexanon genannt.

Geeignete Verbindungen a₂) sind insbesondere Isobutyraldehyd, 2-Ethylhexanol, 2-Methylpentanal, 2-Phenylpropanol und Isovaleraldehyd.

Bei Verbindungen a₂) kann es sich auch um Gemische der vorstehenden C-H aciden Aldehyde und Ketone mit Formaldehyd handeln. Vorzugsweise handelt es sich bei maximal 50 mol-%, insbesondere maximal 30 mol-% der Verbindungen a₂) um Formaldehyd.

Die Herstellung des Kondensationsharzes A) kann z.B. durch saure Kondensation der Verbindungen a₁) und a₂) insbesondere im Temperaturbereich von 60 bis 150°C erfolgen. Entsprechende Verfahren sind dem Fachmann bekannt und z.B. im EP-A-2794 beschrieben.

Bevorzugt enthält das Kondensationsharz A) die Verbindungen a₁) und a₂) im Molverhältnis 1:0,5 bis 1:20, besonders bevorzugt 1:4 bis 1:10. Der Erweichungspunkt (nach DIN 53180) des Harzes B) liegt vorzugsweise zwischen 60 und 140°C.

Das Kondensationsharz A) liegt vorzugsweise lösemittelfrei vor. Es kann z.B. auch als Lösung in einem organischen Lösungsmittel, z.B. Butylacetat, Ethanol oder Methylethylketon, vorliegen.

Bei den strahlungshärtbaren Verbindungen B) handelt es sich um (Meth)acrylatverbindungen, bevorzugt sind jeweils die Acrylatverbindungen, d.h. die Derivate der Acrylsäure.

Bevorzugte (Meth)acrylat-Verbindungen B) enthalten 2 bis 20, bevorzugt 2 bis 10 und ganz besonders bevorzugt 2 bis 6 Acryloyloder Methacryloylgruppen der Formel

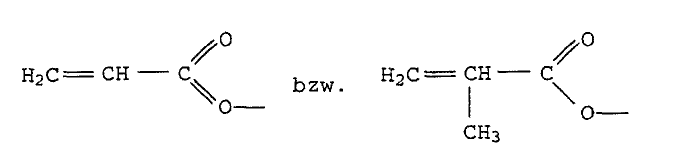

Das zahlenmittlere Molekulargewicht Mₙ der (Meth)acrylatverbindungen B) liegt bevorzugt unter 15000, besonders bevorzugt unter 5000, ganz besonders bevorzugt unter 3000 g/mol und über 180 g/mol (bestimmt durch Gelpermeationschromatographie mit Polystyrol als Standard und Tetrahydrofuran als Elutionsmittel).

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen (Polyether(meth)acrylate) enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte der Alkohole sind in bekannter weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die (Meth)Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z.B. in EP 279 303 beschrieben, aus Acrylsäure, Polycarbonsäure, Polyol hergestellt werden.

Weiterhin kann es sich bei Verbindungen B) z.B. um Epoxid- oder Urethan(meth)acrylate handeln.

Epoxid(meth)acrylate sind z.B. solche wie sie durch Umsetzung von epoxidierten Olefinen oder Poly- bzw. Mono- oder Diglycidylethern, wie Bisphenol-A-diglycidylether, mit (Meth)acrylsäure erhältlich sind.

Die Umsetzung ist dem Fachmann bekannt und z.B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984).

Es können natürlich auch Mischungen verschiedener Verbindungen B), insbesondere auch Mischungen der obigen (Meth)acrylverbindungen, eingesetzt werden.

Bei den Verbindungen B) handelt es sich bevorzugt um oben aufgeführte Polyether(meth)acrylate wie sie durch Veresterung von (Meth)acrylsäure mit alkoxylierten Alkoholen erhalten werden.

Verbindungen B) sind vorzugsweise flüssig und können daher in einfacher Weise mit den Kondensationsharzen A) gemischt werden.

Das erfindungsgemäße Gemisch aus A) und B) enthält vorzugsweise 10 bis 90 Gew.-%, besonders bevorzugt 20 bis 80 Gew.-% und ganz besonders bevorzugt 40 bis 60 Gew.-% des Kondensationsharzes A), bezogen auf die Summe von A) und B).

Entsprechend ist der Gehalt von B) vorzugsweise ebenfalls 10 bis 90 Gew.-%, besonders bevorzugt 20 bis 80 Gew.-% und ganz besonders bevorzugt 40 bis 60 Gew.-%, bezogen auf die Summe aus A) und B).

Das erfindungsgemäße Gemisch eignet sich insbesondere als Bindemittel für Druckfarben. Das Gemisch kann dabei als alleiniges Bindemittel oder im Gemisch mit weiteren Bindemitteln oder Reaktivverdünnern, welche strahlungshärtbar sind und zusammenfassend als Komponente c) bezeichnet werden, Verwendung finden. Vorzugsweise beträgt der Anteil einer derartigen Komponenten c) maximal 50 Gew.-Teile, insbesondere maximal 20 Gew.-Teile, bezogen auf 100 Gew.-Teile der Summe aus A) und B). Die Mitverwendung einer Komponenten C) ist im allgemeinen nicht notwendig. Ebenso ist ein Gehalt an (Meth)acrylamidgruppen gemäß der Lehre von DE-A-225 1433 keinesfalls erforderlich, um zufriedenstellende Druckfarben zu erhalten.

Der Gehalt an Verbindungen mit (Meth)acrylamidgruppen liegt daher vorzugsweise unter 5 Gew.-Teilen, besonders bevorzugt unter 2 Gew.-Teilen, bezogen auf 100 Gew.-Teile der Summe aus Komponenten A) + B) + C).

Besonders bevorzugt enthält Komponente B) und auch die gesamte Druckfarbe keine Verbindungen mit (Meth)acrylamidgruppen.

Bevorzugt enthält die Druckfarbe einen Photoinitiator für die Strahlungshärtungen mit energiereichem Licht, z.B. UV-Licht, vorteilhaft werden oft auch Gemische von Photoinitiatoren eingesetzt. Übliche Photoinitiatoren sind z.B. in R. Holmann, UV and E.B. Curing Formulation for Printing Inks and Paints, London 1984, beschrieben.

Die Gesamtmenge des Photoinitiators beträgt vorzugsweise 0,1 bis 20, besonders bevorzugt 0,5 bis 12 Gew.-%, ganz besonders bevorzugt 2 bis 10 Gew.-%, bezogen auf die Gesamtmenge der radikalisch und gegebenenfalls kationisch polymerisierbaren Verbindungen.

Als Photoinitiatoren für die radikalische Polymerisation in Betracht kommen z.B. Benzophenon und Derivate davon, wie z.B. Alkylbenzophenone, halogenmethylierte Benzophenone, Michlers Keton sowie Benzoin und Benzoinether wie Ethylbenzoinether. Benzilketale wie Benzildimethylketal, Acetonphenonderivate wie z.B. Hydroxy-2-methyl-1-phenylpropan-1-on und Hydroxycyclohexylphenylketon. Anthrachinon und seine Derivate wie Methylanthrachinon und insbesondere Acylphosphinoxide wie z.B. Lucirin TPO (2,4,6-Trimethylbenzoyldiphenylphosphinoxid) und Bisacylphosphinoxide.

Photoinitiatoren für die kationische Photopolymerisation können z.B. bei kationisch polymerisierbaren Verbindungen C, wie Epoxiden und Vinylethern mitverwendet werden und liefern bei Bestrahlung mit UV-Licht Säuren, genannt seinen z.B. Aryldiazonium-, Aryliodonium- oder Arylsulfoniumsalze, Disulfone, Diazodisulfone, Imido-triflate, Benzointosylate folgender Strukturen:

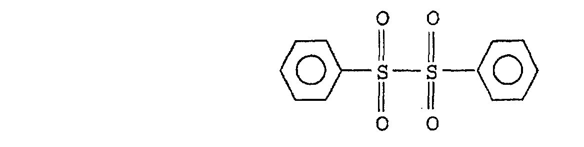

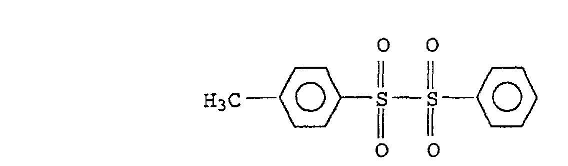

Beispielhaft seien weiterhin p-Methoxybenzoldiazoniumhexafluorophosphat, Benzoldiazoniumtetrafluoroborat, Toluoldiazoniumtetrafluoroarsenat, Diphenyliodoniumhexafluoroarsenat, Triphenylsulfoniumhexafluorophosphat, Benzolsulfoniumhexafluorophosphat, Toluolsulfoniumhexafluorophosphat oder Degacure KI85 (Bis[4-diphenylsulfonio-phenyl]sulfid-bis-hexafluorophosphat), Isochinoliniumsalze, Phenylpyridiniumsalze oder Picoliniumsalze, wie z.B. M-Ethoxy-isochinoliniumhexafluorophosphat, N-Ethoxy-4-phenylpyridiniumhexafluorophosphat oder N-Ethoxy-2-picoliniumhexafluorophosphat genannt. Auch Ferroceniumsalze (z.B. Irgacure 261 von Ciba) oder Titanocene sind geeignet.

Im Falle einer Härtung durch Elektronenstrahlen werden keine Photoinitiatoren benötigt.

Neben dem Bindemittel enthalten Druckfarben als wesentlichen Bestandteil Pigmente.

Der Gehalt des Pigments beträgt vorzugsweise 5 bis 100 Gew.-Teile, bevorzugt 5 bis 50, besonders bevorzugt 10 bis 40 Gew.-Teile, bezogen auf 100 Gew.-Teile Bindemittel, d.h. Summe der Komponenten A), B) und C).

Als Pigmente genannt seien z.B. Titandioxid, Chromgelb, ®Heliogenblau oder ®Heliogengrün, Litholrubin®, Sicogelb® etc.

Weitere Aditive, welche in den Druckfarben enthalten sein können, sind z.B. Wachse, Verlaufsmittel, Entschäumer, Netzmittel, Haftvermittler, Verdicker und Füllstoffe.

Die Druckfarben können in üblichen Druckverfahrenz.B. Flexo-, Sieb-, Hoch-, Tief- oder Tampondruckverfahren verarbeitet werden. Insbesondere eignen sich die erfindungsgemäßen Druckfarben für den Offset-Druck. Sie eignen sich für Drucke auf Papier und Karton, aber auch auf Holz, Metall oder Kunststoff bzw. Kunststofffolien aus Polyethylen, Polypropylen, Polystyrol, PVC, PET, etc.

Nach dem Druckvorgang erfolgt die Härtung des Drucks mit energiereichem Licht oder Elektronenstrahlen.

Das erfindungsgemäße Gemisch und die erfindungsgemäße Druckfarbe haben eine hohe Lagerstabilität. Das erfindungsgemäße Gemisch und die Druckfarbe haben eine gute Reaktivität bei der Strahlungshärtung. Die erhaltenen Drucke zeigen einen hohen Glanz.

Das erfindungsgemäße Gemisch aus A) und B) hat eine besonders gute Fähigkeit zur Pigmentbenetzung, was zu einer guten Bindung des Pigments an das Bindemittel und eine hohe Pigmentaufnahmefähigkeit führt. Zu beobachten ist insbesondere eine geringe Fließgrenze, auch bei hohen Viscositäten.

Weiterhin zeigen Druckfarben, welche das erfindungsgemäße Gemisch enthalten, gute anwendungstechnische Eigenschaften, insbesondere ein gutes Druckverhalten, Im Offsetdruck wird ein scharfes Druckbild auch bei unterschiedlichen Zufuhrmengen von Wasser beobachtet.

### Beispiele

Prozente und Teile sind Gewichtsprozente bzw. Gewichtsteile

### Beispiel 1

Man stellt eine Mischung aus 30 Gew.-Teilen eines Harzes aus Harnstoff und Butyraldehyd (Laropal® A81) und 70 Gew.-Teilen des Polyetheracrylates Laromer® PO33F her durch Rühren der Komponenten bei 80°C. 75 Gew.-Teile dieser Mischung werden mit 15 % Druckfarbenpigment einer Photoinitiatormischung aus 4 % Lucirin LR 8893, 4 % Quantacure® ITX und 2 % Esacure TZT, bezogen auf die Mischung, gemischt und 10 min mit einem Dissolver bei 4000 Upm vordispergiert. Anschließend wird diese Mischung dreimal auf einem Dreiwalzwerk bei einem Anpreßdruck zwischen 5 und 10 bar dispergiert.

### Vergleichsbeispiel 1A:

Man stellt eine Mischung aus 20 Gew.-Teilen des Ketonharzes Kunstharz CA (Cyclohexanon-Aldehydharz der Fa. Hüls) und 80 Gew.-Teilen des strahlungshärtbaren Polyetheracrylates Laromer PO33F her durch Rühren der Komponenten bei 80°C.

75 Gew.-Teile dieser Mischung wurden wie im Beispiel 1 mit den Additiven zu einer Druckfarbe vermischt.

### Vergleichsbeispiel Ib:

Man stellt eine Mischung aus 60 Teilen des strahlungshärtbaren Epoxyacrylates Laromer LR8819 und 40 Teilen des strahlungshärtbaren Polyetheracrylates Laromer PO33F her durch Rühren der Komponenten bei 80°C. 75 Teile dieser Mischung wurden wie im Beispiel 1 mit den Additiven zu einer Druckfarbe vermischt.

### Vergleichsbeispiel Ic:

Man stellt eine Mischung aus 60 Gew.-Teilen des mit Ölsäure modifizierten Polyesteracrylates Ebecryl DEC 657 (welches von der Firma UCB als Pigmentbenetzer angeboten wird) und 40 Gew.-Teilen des strahlungshärtbaren Polyetheracrylates Laromer PO33F her durch Rühren der Komponenten bei 80°C.

75 Gew.-Teile dieser Mischung wurden wie oben mit den Additiven vermischt.

### Beispiel 2:

Man stellt eine Mischung aus 15 Gew.-Teilen eines Harzes aus Harnstoff und Butyraldehyd (Laropal A81), 75 Gew.-Teilen des strahlungshärtbaren, aminmodidizierten Polyetheracrylates Laromer LR8894 und 10 Gew.-Teilen des strahlungshärtbaren Polyetheracrylates Laromer PO33F her durch Rühren der Komponenten bei 80°C. 75 Gew.-Teile dieser Mischung werden mit 15 % Druckfarbenpigment, 4 % Lucirin LR8893, 4 % Quantacure ITX und 2 % Esacure TZT vorgemischt und 10 min mit einem Dissolver bei 4000 Upm vordispergiert. Anschließend wird diese Mischung 60 min auf einem Skandex-Mischer mit Stahlkugeln mit einem Durchmesser von ca. 3 mm dispergiert (geschüttelt). Auf 100 Gew.-Teile Druckfarbe werden 200 Gew.-Teile Stahlkugeln verwendet. Nach der Dispergierung wird die fertige Druckfarbe von den Stahlkugeln abgetrennt.

### Beispiel 2A: (ohne Aldehydharz aus Harnstoff und Butyraldehyd)

Man stellt eine Mischung aus 75 Gew.-Teilen des strahlungshärtbaren aminmodifizierten Polyetheracrylates Laromer LR8894 und 25 Gew.-Teilen des strahlungshärtbaren Polyetheracrylates Laromer PO33F her durch Rühren der Komponenten bei 80°C.

75 Gew.-Teile dieser Mischung wird wie im Beispiel 2 mit den Additiven zur Druckfarbe vermischt.

### II Eigenschaften der Druckfarben

Die Anteile der Bindemittelkomponenten bei den Druckfarben der Beispiele 1 und 1A bis 1C wurden so gewählt, daß die Viskositäten der erhaltenen Druckfarben möglichst vergleichbar ist. Wie aus nachstehender Tabelle 1 hervorgeht, zeigen die Druckfarben gemäß Beispiel 1 bei gleicher Viskosität die niedrigste Fließgrenze. Die Fließgrenze ist definiert als die Kraft bzw. Scherkraft, die mindestens benötigt wird, damit die Druckfarbe fließt.

**Tabelle 1**

| | Bsp. 1 | Bsp. 1A | Bsp. 1B | Bsp. 1C |
|---|---|---|---|---|
| Druckfarbenpigment=Heliogen-blau D7106: | | | | |
| Viskosität (Pa.s. 23°C) | 2,2 | * | 4,3 | 2,2 |
| Fließgrenze (Pa. 23°C) | 20 | * | 40 | 20 |
| Druckfarbenpigment=Litholrubin D4577: | | | | |
| Viskosität (Pa.s. 23°C) | 3,2 | 3,8** | 5,0 | 3,3 |
| Fließgrenze (Pa. 23°C) | 15 | 15** | 60 | 30 |
| Druckfarbenpigment=Sicogelb D1361DD: | | | | |
| Viskosität (Pa.s. 23°C) | 7,8 | 6,0*** | 7,0 | 8,0 |
| Fließgrenze (Pa. 23°C) | 50 | 5*** | 125 | 140 |

| | | | | |
|---|---|---|---|---|
| * Die Druckfarbe ist nach einem Tag polymerisiert. | | | | |
| ** Die Druckfarbe ist nach 1 Tag teilweise polymerisiert. | | | | |
| *** Die Druckfarbe ist nach 3 Tagen teilweise polymerisiert. | | | | |

**Tabelle 2**

| | Beispiel 2 | Beispiel 2A |
|---|---|---|
| Druckfarbenpigment=Heliogenblau D7106: | | |
| Viskosität (Pa.s. 23°C) | 2,2 | 1,2 |
| Fließgrenze (Pa. 23°C) | 20 | 25 |
| Druckfarbenpigment=Litholrubin D4574: | | |
| Viskosität (Pa.s. 23°C) | 3,0 | 1,5 |
| Fließgrenze (Pa. 23°C) | 1 | 15 |
| Druckfarbenpigment=Litholrubin D4577: | | |
| Viskosität (Pa.s. 23°C) | 2,1 | 1,4 |
| Fließgrenze (Pa. 23°C) | 2 | 35 |
| Druckfarbenpigment=Sicogelb D1358: | | |
| Viskosität (Pa.s. 23°C) | 2,3 | 40 |
| Fließgrenze (Pa. 23°C) | 40 | 80 |

Trotz etwas höherer Viskosität als die Farben in Beispiel 2A zeigen die Druckfarben in Beispiel 2, welche die Mischung aus Kondensationsharz und strahlungshärtbarem Bindemittel enthalten, eine wesentlich niedrigere Fließgrenze, und damit bessere Fließfähigkeit, besseres Mitgehen auf der Druckmaschine, und vergleichbare Reaktivität.

Wegen der niedrigeren Fließgrenze wird so die Herstellung höherpigmentierter, farbstärkerer Druckfarben bzw. die Herstellung von Pigmentkonzentration ermöglicht.

## Patentansprüche

1. Gemisch, enthaltend
ein Kondensationsharz A) aufgebaut aus Harnstoff oder Harnstoffderivaten a₁) und Ketonen oder Aldehyden a₂), welche ausgewählt sind aus C-H aciden Aldehyden bzw. Ketonen oder deren Gemische mit Formaldehyd und
eine strahlungshärtbare Verbindung B) mit mindestens 2 Acryloyl- oder Methacryloylgruppen.

2. Gemisch gemäß Anspruch 1, enthaltend
10 bis 90 Gew.-% des Kondensationsharzes A) und
10 bis 90 Gew.-% der Verbindung B), bezogen auf die Summe A)+B).

3. Gemisch gemäß Anspruch 1 oder 2, wobei das Kondensationsharz eine Erweichungstemperatur zwischen 60 und 140°C aufweist.

4. Gemisch gemäß einem der Ansprüche 1 bis 3, wobei das Kondensationsharz aus a₁) und a₂) im Molverhältnis 1:4 bis 1:10 aufgebaut ist.

5. Gemisch gemäß einem der Ansprüche 1 bis 4, wobei die Ketone der Aldehyde a₂) aus
50 bis 100 Gew.-% C-aciden Aldehyden oder Ketonen und
0 bis 50 Gew.-% Formaldehyd, bezogen auf die Gesamtmenge a₂),
bestehen.

6. Gemisch gemäß einem der Ansprüche 1 bis 5, wobei es sich bei dem C-H aciden Aldehyd oder Keton um Isobutyraldehyd handelt.

7. Gemisch gemäß einem der Ansprüche 1 bis 6, wobei es sich bei der strahlungshärtbaren Verbindung B um eine Verbindung mit 2 bis 20 Acryloyl- oder Methacryloylgruppen handelt.

8. Gemisch gemäß einem der Ansprüche 1 bis 7, wobei die strahlungshärtbare Verbindung B ein zahlenmittleres Molekulargewicht unter 15 000 g/mol hat.

9. Gemisch gemäß einem der Ansprüche 1 bis 8, wobei es sich bei B) um Polyester- oder Polyetheracrylate handelt.

10. Verwendung des Gemischs gemäß einem der Ansprüche 1 bis 9 als Bindemittel für Druckfarben.

11. Druckfarben, enthaltend ein Gemisch gemäß einem der Ansprüche 1 bis 9 als Bindemittel.

12. Verwendung des Gemisches gemäß einem der Ansprüche 1 bis 9 als Bindemittel für Druckfarben im Offsetdruck.

## Claims

1. A mixture comprising
a condensation resin A) constructed from urea or urea derivatives a₁) and ketones or aldehydes a₂) selected from acidic-CH aldehydes or ketones and their mixtures with formaldehyde, and
a radiation-curable compound B) having at least 2 acryloyl or methacryloyl groups.

2. A mixture as claimed in claim 1, comprising
from 10 to 90% by weight of said condensation resin A), and
from 10 to 90% by weight of said compound B), based on the sum of A)+B).

3. A mixture as claimed in claim 1 or 2, wherein said condensation resin has a softening temperature within the range from 60 to 140°C.

4. A mixture as claimed in any of claims 1 to 3, wherein said condensation resin is constructed from a₁) and a₂) in a molar ratio within the range from 1:4 to 1:10.

5. A mixture as claimed in any of claims 1 to 4, wherein said ketones or aldehydes a₂) comprise
from 50 to 100% by weight of acidic-CH aldehydes or ketones, and
from 0 to 50% by weight of formaldehyde, based on the total amount of a₂).

6. A mixture as claimed in any of claims 1 to 5, wherein said acidic-CH aldehyde or ketone is isobutyraldehyde.

7. A mixture as claimed in any of claims 1 to 6, wherein said radiation-curable compound B is a compound having from 2 to 20 acryloyl or methacryloyl groups.

8. A mixture as claimed in any of claims 1 to 7, wherein said radiation-curable compound B has a number average molecular weight below 15,000 g/mol.

9. A mixture as claimed in any of claims 1 to 8, wherein B) comprises polyester acrylates or polyether acrylates.

10. The use of the mixture of any of claims 1 to 9 as a binder for printing inks.

11. Printing inks comprising a mixture as claimed in any of claims 1 to 9 as binder.

12. The use of the mixture of any of claims 1 to 9 as a binder for printing inks in offset printing.

## Revendications

1. Mélange, contenant
une résine de condensation A) constituée d'urée ou de dérivés d'urée a₁) et de cétones ou d'aldéhydes a₂), qui sont sélectionnés parmi les aldéhydes, respectivement les cétones acides C-H ou leurs mélanges avec du formaldéhyde, et
un composé durcissable par rayonnement B) avec au moins 2 groupes acryloyle ou méthacryloyle.

2. Mélange suivant la revendication 1, contenant
10 à 90 % en poids de la résine de condensation A), et
10 à 90 % en poids du composé B), rapportés à la somme A)+B).

3. Mélange suivant la revendication 1 ou 2, dans lequel la résine de condensation présente une température de ramollissement comprise entre 60 et 140°C.

4. Mélange suivant l'une quelconque des revendications 1 à 3, dans lequel la résine de condensation est constituée de a₁) et a₂) dans un rapport molaire de 1:4 à 1:10.

5. Mélange suivant l'une quelconque des revendications 1 à 4, dans lequel les cétones des aldéhydes a₂) se composent de
50 à 100 % en poids d'aldéhydes ou cétones acides C et
0 à 50 % en poids de formaldéhyde, rapportés à la quantité totale a₂).

6. Mélange suivant l'une quelconque des revendications 1 à 5, dans lequel il s'agit, pour l'aldéhyde ou la cétone acide C-H, d'isobutyraldéhyde.

7. Mélange suivant l'une quelconque des revendications 1 à 6, dans lequel il s'agit, pour le composé B) durcissable par rayonnement, d'un composé avec 2 à 20 groupes acryloyle ou méthacryloyle.

8. Mélange suivant l'une quelconque des revendications 1 à 7, dans lequel le composé B) durcissable par rayonnement a un poids moléculaire moyen inférieur à 15 000 g/mole.

9. Mélange suivant l'une quelconque des revendications 1 à 8, dans lequel il s'agit, pour B), d'acrylates de polyester ou de polyéther.

10. Utilisation du mélange suivant l'une quelconque des revendications 1 à 9 comme agent liant pour les encres d'imprimerie.

11. Encres d'imprimerie, contenant un mélange suivant l'une quelconque des revendications 1 à 9.

12. Utilisation du mélange suivant l'une quelconque des revendications 1 à 9, comme agent liant pour des encres d'imprimerie en impression offset.
